# FASCICULE DE BREVET EUROPEEN

(11) **EP 3 260 432 B1**
(45) Date de publication et mention de la délivrance du brevet: **05.08.2020**
(21) Numéro de dépôt: 17176013.5
(22) Date de dépôt: 14.06.2017
(51) Int. Cl.: C04B 26/04, C09D 5/34, C08K 3/36, E04B 2/02, C04B 26/06

(54) **COMPOSITION DE MORTIER COLLE MONOCOMPOSANT POUR MACONNERIE A JOINTS MINCES**
EINKOMPONENTEN-KLEBEMÖRTELZUSAMMENSETZUNG FÜR MAURERARBEITEN MIT DÜNNEN STOSSFUGEN
SINGLE-COMPONENT ADHESIVE MORTAR COMPOSITION FOR CLOSE-CONTACT MASONRY

(30) Priorité: 20.06.2016 FR 1655723
(43) Date de publication de la demande: 27.12.2017
(73) Titulaire: SAINT-GOBAIN WEBER, 94370 Sucy-en-Brie (FR)
(72) Inventeur: RIECKBORN, Timo, 79238 Ehrenkirchen (DE); OPDENBUSCH, Kersten, 45711 Datteln (DE); ZEMB, Anne, 68127 Saint Croix En Plaine (FR); FÜHRICH, Uwe, 79238 Ehrenkirchen (DE)
(74) Mandataire: Saint-Gobain Recherche

(56) Documents cités:
- EP-A1- 1 403 226
- EP-A2- 0 199 921
- WO-A1-00/50355
- WO-A1-2012/107254
- DE-A1- 4 421 970
- DE-U1-202009 004 798
- FR-A1- 2 319 751
- US-A1- 2011 061 335

## Description

La présente invention porte sur une composition de mortier-colle mono-composant prête à l'emploi se présentant sous forme pâteuse pour des travaux de maçonnerie, et notamment pour le montage de murs non porteurs à partir de blocs de maçonnerie à joints minces. Un procédé d'érection de ce type de mur mettant en œuvre ladite composition de mortier est également décrit.

Dans le domaine de la maçonnerie traditionnelle, il est très courant d'utiliser des mortiers à base de sables, ciment et chaux, préparés directement sur site au moment de leur utilisation par mélange avec de l'eau de gâchage. Ces compositions de mortiers sont le plus souvent des compositions sèches stockées dans des sacs ou des silos. Leur préparation nécessite d'avoir sur le lieu d'utilisation à la fois un certain nombre de consommables tels que l'eau, l'électricité et également des outils de mélange adéquats ainsi que la main d'œuvre nécessaire et qualifiée pour la préparation puis l'application des mortiers. Les procédés de préparation sont consommateurs de temps pour l'applicateur et nécessitent de prendre certaines précautions, notamment lors de la manipulation des compositions pulvérulentes qui peuvent éventuellement générer de la poussière. Il est également nécessaire, après la préparation du mortier, de nettoyer l'ensemble des outils utilisés. Une fois préparés, les mortiers sont appliqués sur la surface d'un premier élément de maçonnerie tel qu'un bloc ou une brique. L'application est traditionnellement effectuée manuellement à l'aide d'une truelle, puis un second élément de maçonnerie est positionné sur le premier, permettant ainsi la construction d'un mur. Cette opération est répétée jusqu'à obtenir la hauteur souhaitée. D'autres systèmes d'applications existent et sont notamment décrits dans les demandes de brevets WO 2012/143768 ou US 2011/185673. Toutefois, ces différentes techniques ne jouent pas un rôle majeur dans la simplification des procédés pour l'applicateur qui doit rester une personne expérimentée. Il existe un réel besoin de simplification des procédés de maçonnerie puisque les frais de main d'œuvre peuvent représenter encore aujourd'hui jusqu'à 75% des coûts totaux de maçonnerie. Une des solutions envisagées est l'utilisation de blocs à joints minces, et leur collage par des mortiers prêts à l'emploi.

L'existence de blocs de maçonnerie de taille calibrée à joints minces permet de réduire de façon importante la consommation de mortier par rapport à ce qui était utilisé pour des blocs à joints épais. Ces blocs sont posés les uns sur les autres par une technique de pose « collée » qui nécessite uniquement d'appliquer une couche relativement fine, d'environ 1 à 2 mm, permettant à la fois d'ajuster la hauteur du bloc, de corriger les petites irrégularités et de coller le bloc avec le bloc adjacent positionné dessus. Pour ces applications en couche fine, il est particulièrement avantageux d'utiliser des mortiers prêts à l'emploi, qui ne nécessitent pas de lourdes préparations pour leurs mises en œuvre. La demande de brevet US 2011/0061335 propose un produit adhésif moussant monocomposant prêt à l'emploi à base de polyuréthane. L'inconvénient principal de ce produit réside dans le fait qu'il comprend des composés toxiques classés comme cancérigènes (H351 catégorie 2) et par conséquent qui sont parfois non compatibles avec les règles européennes en matière d'EHS ou qui demandent des précautions d'utilisation particulières. Les règlements en matière de sécurité dans certains pays sont très sévères et l'utilisation de ce type de produit peut être problématique, notamment lorsque se pose la question de durabilité des matériaux organiques dans le temps. Un autre inconvénient des produits à base de mousse polyuréthane est le temps d'application et de correction très court qui existe une fois que la mousse n'est plus dans son contenant. Une solution qui semble davantage compatible avec les problèmes environnementaux est décrite dans la demande CN101067053. La composition d'adhésif décrite dans ce document est une composition mono-composant qui comprend entre 15 et 30% d'une dispersion polymérique, entre 40 et 60% de liant minéral et entre 20 et 30% d'eau. De façon non surprenante, la résistance à l'eau d'une telle composition reste médiocre et le séchage puis le durcissement doivent nécessiter des temps longs en raison de la teneur importante en eau.

La présente invention résout les problèmes mentionnés ci-avant en proposant une solution qui est prête à l'emploi, mono-composant, sous forme de pâte et qui est applicable de façon manuelle traditionnelle, par exemple en utilisant une truelle ou un rouleau-applicateur et également avec des équipements automatisés de type pompe. La composition de mortier-colle selon la présente invention permet notamment un séchage et une prise compatible avec différentes conditions climatiques en termes de température et d'humidité, et également un ajustement aisé de la hauteur permettant de corriger les petites irrégularités dimensionnelles pendant le travail de montage ou érection des murs de maçonnerie. Pour cela, la composition de mortier-colle selon la présente invention contient une faible quantité d'eau, associée à un choix particulier de granulats, notamment au niveau de leur taille de particules.

La présente invention porte sur une composition pâteuse de mortier-colle prêt à l'emploi et mono composant pour la construction de murs non porteurs en blocs de maçonnerie, qui comprend au moins :
- de 50% à 90% en poids de granulats dont au moins 15% ont une taille de particules comprise entre 0,5 mm et 1,5 mm,
- de 6 à 12 % en poids d'eau, et
- de 2 à 8% en poids d'un liant organique.

La faible quantité d'eau dans la composition ainsi que la présence d'une quantité minimale de granulats dont la taille des particules est comprise entre 0,5 et 1,5 mm, et d'un liant organique permet avantageusement d'obtenir un séchage et une prise rapide de la composition de mortier-colle, en garantissant également les propriétés de résistance mécanique à la traction souhaitées, même à basse température. La consistance de la composition de mortier selon la présente invention permet également de corriger et d'ajuster les irrégularités de hauteur qui peuvent exister entre les différents blocs de maçonnerie utilisés.

Les granulats peuvent être des granulats naturels, des granulats artificiels ou recyclés, éventuellement des granulats légers de masse volumique inférieure à 2000 kg/m³. Ces granulats sont notamment des sables, des fillers et/ou des gravillons. Il est essentiel pour la composition de mortier-colle selon la présente invention qu'au moins 15% de la quantité totale de granulats soit des granulats dont la taille des particules est comprise entre 0,5 et 1,5 mm. Préférentiellement, au moins 20% de la quantité de granulats présents dans la composition ont une taille de particules compris entre 0,5 et 1,5 mm.

De façon préférée, la composition de mortier-colle selon la présente invention comprend entre 75% et 90% en poids de granulats, dont au moins 15% ont une taille de particules comprise entre 0,5 et 1,5 mm.

La distribution granulométrique des grains contenus dans un granulat est déterminée par tamisage, avec une série de tamis de dimensions d'ouvertures décroissantes et exprime le pourcentage massique de granulats passant au travers d'un ensemble spécifié de tamis. La proportion de particules retenues par un tamis est définie comme le refus, son complément étant le passant.

La composition de mortier-colle selon la présente invention comprend entre 2 et 8 % en poids, de préférence entre 3 et 7 % en poids d'un liant organique et encore plus préférentiellement entre 5 et 7% en poids d'un liant organique. Un tel liant est composé de macromolécules organiques. Le liant organique utilisé dans la composition de mortier-colle selon la présente invention est intégré dans la formulation pâteuse, ce qui permet de qualifier le mortier-colle comme étant mono-composant. Le liant organique a de préférence une température minimale de formation de film (TMFF) inférieure à 5°C et une température de transition vitreuse inférieure (Tg) à 10°C. La TMFF correspond à la température à partir de laquelle les polymères lorsqu'ils sont appliqués sur un substrat fusionnent et forment un film mince. Pour les applications recherchées et notamment la bonne maniabilité et la prise rapide aux basses températures, il est avantageux que le liant organique entrant dans la composition du mortier-colle selon la présente invention ait une TMFF et une Tg relativement basses.

De façon préférée, le liant organique est à base de polymères synthétiques dispersés dans un liquide aqueux et/ou sous forme de poudre redispersible. Les polymères sont choisis parmi les copolymères styrène-butadiène, les copolymères styrène-acrylate, les copolymères vinyle acrylique, les polymères acrylates, les copolymères éthylène-acétate de vinyle, les esters d'acide acrylique, et les hydrocarbures non-aromatiques comprenant au moins deux doubles liaisons, ou polychloroprènes. Lorsqu'on mentionne les composés de type acrylate ou acrylique, les dérivés de type méthacrylate ou méthacrylique sont également compris dans les listes.

A titre d'exemple, les polymères sont choisis parmi les homopolymères tels que les esters vinyliques, les polyesters, les polyépoxydes ou les polyamides, le 2-chloro-1,3-butadiène, ou les copolymères; par exemple les polymères ou copolymères comprenant une, deux ou plusieurs unités monomères obtenues à partir de monomères choisis parmi l'acétate de vinyle, le propionate de vinyle, le butyrate de vinyle, l'hexanoate de vinyl-2-éthyle, le vinyl laureate, l'acétate de 1-méthylvinyle, le pivalate de vinyle ou les esters vinyliques d'acides monocarboxyliques alpha-branchés comprenant de 9 à 11 atomes de carbone; les esters ou les amides d'acide méthacrylique, tels que le méthylacrylate, le méthylméthacrylate, l'éthylacrylate, l'éthylméthacrylate, le propylacrylate, le propylméthacrylate, l'hydroxyéthylacrylate, l'hydroxyéthylméthacrylate, l'hydroxypropylacrylate, l'hydroxypropylméthacrylate, le n-butylacrylate, le n-butylméthacrylate, le t-butylacrylate, le t-butylméthacrylate ou le 2-éthylhexylacrylate; les aromatiques vinyliques, par exemple le styrène, le méthylstyrène ou le vinyltoluène; les oléfines, telles que l'éthylène, le propylène, le 1,3-butadiène et l'isoprène; les 1,3-diènes; les halogénures vinyliques, par exemple les monomères copolymérisables du chlorure de vinyle tels que l'acide fumarique, l'acide maléique ou son ester diéthylqiue ou ester diisoproplylique ou son anhydride, les acides sulfoniques éthyléniquement insaturés ou leurs sels, tels que l'acide sulfonique vinylique, l'acide 2-acrylamido-2-méthyl-propane sulfonique, le phthalate de diallyle, l'adipate de divynile , le maléate de diallyle, le méthacrylate d'allyle ou le cyanurate de triallyle, ou les comonomères réticulents, tels que l'acide acrylamidoglycolique, l'ester méthylique d'acide méthylacrylamidoglycolique, le N-méthylolacrylamide, le N-méthylo-méthacrylamide, N-le méthylsolallylcarbamate, les éthers d'alkyle tels que l'isobutoxyéther ou l'ester de N-méthylolacrylamide ou -méthacylamide, les époxy-fonctionnalisés tels que le méthacrylate de glycidyle ou acrylate de glycidyle, les comonomères de silicium, tels que les acryloxypropyltrialkoxy silanes ou les méthacryloxypropyltrialkoxy silanes, dans lesquels les alkoxy sont par exemple méthoxyéthers, éthoxyéthers ou éthoxyéthylene éthers ou propylèneglycoléthers, les diacétone acrylamides et les acétylacétoxyéthylacrylate ou -méthacrylate.

Les composes préférés sont par exemple les acrylates et les polychloroprènes, les copolymères de deux ou plusieurs monomères choisis parmi le styrène, l'acide méthacrylique, le méthyl- ou éthyl-méthacrylate et méthacrylamide, l'acrylonitrile, le butadiène, le styrène-butadiène carboxylé, l'acétate-éthylène de vinyle, le chlorure d'acétate de vinyle - éthylène de vinyle.

Lorsque le liant organique est une dispersion polymérique, la teneur en matière sèche du liant organique représente de 20 à 70 parties en poids de la dispersion polymérique, le reste étant un liquide aqueux.

La quantité d'eau présente dans la composition de mortier-colle est comprise entre 6 et 12% en poids par rapport au poids total de la composition. Cette quantité d'eau correspond à la quantité totale d'eau et prend donc en considération la quantité d'eau provenant du liant organique lorsque celui-ci est une dispersion polymérique aqueuse. De façon préférée, la quantité d'eau est comprise entre 6 et 10% en poids par rapport au poids total de la composition.

La composition de mortier colle selon la présente invention comprend en outre un ou plusieurs additifs choisi parmi les agents épaississants, les agents rétenteurs d'eau, les agents accélérateurs ou retardateurs de prise, les agents de protection biocides et/ou fongicides, les agents dispersants, les agents démoussants, les agents plastifiants, les agents conservateurs et/ou les pigments. Ces additifs permettent notamment d'ajuster la rhéologie de la composition pâteuse, ses propriétés et sa coloration. La quantité respective de ces agents peut varier en fonction de leur nature. Toutefois, la quantité de chacun d'entre eux représente de préférence moins de 5% du poids total de la composition de mortier-colle.

La présente invention porte également sur un procédé d'érection d'un mur non porteur comprenant une pluralité de rangées de blocs de maçonnerie superposées les unes sur les autres, ledit procédé comprenant les étapes suivantes :
a) application d'une couche de la composition de mortier-colle décrite ci-avant sur au moins une partie de la face supérieure d'une première rangée inférieure de blocs de maçonnerie, puis
b) positionnement d'une rangée de blocs de maçonnerie sur de ladite rangée inférieure recouverte en partie de la couche de mortier-colle, et
c) répétition des étapes a) et b) jusqu'à atteindre la hauteur souhaitée du mur.

Ainsi la composition de mortier-colle permet de coller ensemble deux rangées de blocs positionnées l'un au-dessus de l'autre. Cette opération est répétée sur les rangées successives au fur et à mesure de l'érection du mur jusqu'à atteindre la hauteur souhaitée.

Les blocs de maçonnerie sont des blocs de dimensions prédéfinies. Ils sont généralement en argile expansé, comme par exemple des blocs en Leca®, en béton, en silicate de calcium, ou en tout autre matériau similaire permettant de former des blocs moulés. Ces blocs, même en étant de dimension définie possèdent certaines irrégularités de forme pouvant conduire à des différences de hauteur. La consistance de la pâte de mortier-colle et notamment la présence de granulats de diamètre compris entre 0,5 et 1,5 mm permet avantageusement de corriger ces irrégularités lors du montage du mur.

La couche de mortier-colle est appliquée sur au moins une partie de la face supérieure du bloc de maçonnerie destiné à recevoir un autre bloc au-dessus. L'application peut être réalisée de façon manuelle, par exemple avec une spatule crantée ou une truelle. L'application peut également être faite avec rouleau-applicateur que l'on déplace sur la rangée de blocs de maçonnerie et qui libère la composition pâteuse au fur et à mesure de son déplacement. Elle peut également être faite avec une pompe à dosage équipée d'une ou plusieurs filières d'extrusion, une poche à colle, ou un contenant type boite ou bouteille équipé d'une buse permettant d'extraire directement la composition pâteuse de mortier-colle. La consistance de la pâte de mortier-colle permet avantageusement de pouvoir être appliquée à la fois manuellement et par une pompe, comme par exemple des pompes à mortier Graco ou la pompe MagicPlus P80. Le choix de la pompe à utiliser peut être adapté en fonction de la composition du mortier-colle, et en particulier en fonction de la taille des particules de granulats. Certaines pompes sont plus adaptées que d'autres. D'autre part, cette consistance, due notamment à la présence de granulats de taille relativement importante permet de limiter la quantité de pâte qui pourrait s'écouler lors de l'application entre deux rangées de blocs de maçonnerie.

La couche de mortier-colle est généralement appliquée sur une épaisseur comprise entre 1 et 2mm, ce qui peut être considérée comme relativement fine.

Le mur ainsi fabriqué est stabilisé très rapidement en raison du séchage rapide de la composition de mortier-colle appliquée entre deux rangées successives de blocs de maçonnerie. Après environ une dizaine de minutes, les blocs de maçonnerie sont considérés comme collés les uns sur les autres et il n'est plus possible de les déplacer. De façon très avantageuse, ces temps de stabilisation ou séchage courts sont obtenus également à des températures de l'ordre de 5°C, ce qui permet de réaliser des chantiers de construction pendant les périodes automnales ou hivernales.

Après érection complète du mur, celui-ci est avantageusement recouvert d'un enduit, ce qui permet de masquer l'ensemble des joints de maçonnerie qui ont été appliqués entre les différentes rangées de blocs de maçonnerie.

Les exemples ci-après illustrent l'invention sans en limiter la portée.

### Exemples

Trois formulations de mortier-colle ont été préparées et comparées entre elles lors d'un procédé d'érection d'un mur non porteur fait de blocs de maçonnerie à joints minces. La composition 1 est conforme à l'invention. Les compositions 2 et 3 sont données à titre de comparaison. La composition 2 est également une composition pâteuse prête à l'emploi alors que la composition 3 est obtenue à partir d'une composition sèche de mortier, gâchée directement sur le chantier. Le temps de séchage à 5°C, le temps pendant lequel il était possible d'ajuster le positionnement d'un bloc de maçonnerie ainsi que la quantité de pâte débordant entre les blocs ont été mesurés.

Pour chacune des compositions, deux méthodes d'application de la couche de mortier-colle ont été testées. La première méthode est une méthode d'application manuelle avec une spatule. La seconde méthode d'application a consisté à déplacer un rouleau-applicateur rempli de la composition de mortier-colle le long d'une rangée de blocs de maçonnerie à recouvrir.

L'ouvrabilité de chacune des compositions est évaluée par l'applicateur.

Le temps ouvert, ou temps pendant lequel il est possible de déplacer un bloc de maçonnerie positionné sur un premier bloc recouvert de mortier-colle est évalué en cherchant à déplacer à la main le bloc supérieur à intervalles de temps régulier (toutes les 5 minutes).

Le temps de séchage est évalué par pesée régulière d'un bloc de maçonnerie de type LECA® d'une surface de 190x195mm, sur laquelle une couche de la composition de mortier-colle d'une épaisseur comprise entre 1 et 2 mm est appliquée. Le bloc de maçonnerie est pesé une première fois lorsque la couche de mortier-colle est appliquée, puis chaque jour jusqu'à ce que le poids de l'échantillon se soit stabilisé. On considère en effet que lorsque le poids est stabilisé, la totalité de l'eau s'est évaporé et par conséquent la composition de mortier-colle est sèche. Entre chaque pesée, les échantillons sont stockés à une température comprise entre 3 et 7°C.

La quantité de pâte qui s'écoule entre les blocs de maçonnerie est également mesurée en constituant deux piles de blocs de maçonnerie en LECA® de hauteur différente : l'une est constituée de 2 blocs collés ensemble et l'autre de 3 blocs collés ensemble. La couche de mortier-colle est dans ce cas appliquée manuellement à la truelle. Le récipient contenant la composition pâteuse de mortier-colle est pesé avant et après chaque application pour déterminer précisément la quantité de pâte appliquée. La quantité de pâte qui s'écoule entre les blocs au moment de l'application est collectée et est pesée.

Le tableau ci-après détaille les compositions de chacune des compositions de mortier-colle testées, les teneurs de chacun des constituants étant donnés en pourcentage pondéral.

**Tableau 1 : Composition de mortier-colle**

| Constituant | Composition 1 | Composition 2 | Composition 3 |
|---|---|---|---|
| Eau | 6-10 % | 30-50 % | 18-24% |
| Liant inorganique | 0 % | 0 % | 10-15 % |
| Granulats | 50-90 % | 30-70 % | 70-90 % |
| Liant organique | 2-8 % | 10-20 % | 0 % |
| Agent épaississant | 0-1 % | 1-10% | 0-1 % |
| Agent accélérateur de prise | 0-5 % | 0-5 % | 0% |
| Agent dispersant | 0-5 % | 0-5 % | 0 |
| Agent démoussant | 0-1 % | 0-5 % | 0-1 % |
| Agent plastifiant | 0 % | 0 % | 1-5 % |
| Entraineur d'air | 0 % | 0 % | 0-1 % |
| Fibres | 0 % | 0 % | 0-1 % |
| Agents conservateurs | 0-1 % | 0-1 % | 0% |

La distribution des tailles de particules des granulats utilisés dans les différentes compositions de mortier-colle testées est donnée dans le tableau 2 ci-après. Le pourcentage de particules passant les différents tamis sont indiqués.

**Tableau 2 : Distribution de la taille des particules de granulats pour chacune des compositions de mortier-colle**

| Taille du tamis (mm) | Composition 1 | Composition 2 | Composition 3 |
|---|---|---|---|
| 1,500 | 100 | - | 100 |
| 1,000 | 89 | - | 86 |
| 0,500 | 80 | - | 63 |
| 0,250 | 65 | 100 | 47 |
| 0,125 | 37 | 95 | 34 |
| 0,074 | | 70 | 27 |

La composition 1 est applicable facilement de façon homogène et régulière sur la totalité de la longueur des blocs de construction par des techniques manuelles, par exemple à la truelle et également avec un rouleau-applicateur. En revanche, la composition 2 est applicable uniquement par des techniques manuelles puisqu'elle est trop collante pour être appliquée au rouleau-applicateur. Des essais ont été réalisés en diluant à 20% la composition 2 mais n'ont pas permis d'aboutir à une application satisfaisante et régulière avec un rouleau-applicateur.

De la même manière, l'ouvrabilité de la composition 2 est nettement moins bonne que celle de la composition 1, la composition 2 ayant tendance à coller aux outils d'application.

Les mesures des « temps ouverts » ou temps pendant lesquels il est possible de déplacer les blocs de maçonnerie sont résumées dans le tableau 3 ci-après :

**Tableau 3 : Mesure du temps ouvert**

| | Temps en minutes |
|---|---|
| Bloc positionné sur un bloc revêtu de la composition 1 | 10 |
| Bloc positionné sur un bloc revêtu de la composition 2 | 60 |
| Bloc positionné sur un bloc revêtu de la composition 3 | 15-20 |

Le mur est stabilisé d'autant plus rapidement que le temps ouvert est court. Par conséquent, la composition 1 permet d'obtenir de meilleurs résultats en termes de stabilisation.

Les temps de séchage des compositions 1 et 2 ont été mesurés à des températures d'environ 5°C, comme expliqué précédemment. La composition 1 a été testée en tant que telle et également diluée par addition de 1,5% d'eau pour se placer dans les conditions les plus défavorables. La composition 2 a été testée sans dilution. Les résultats obtenus ont montré que la composition 1, même une fois diluée, est sèche après deux jours alors que la composition 2 sèche en 7 jours, notamment en raison de la plus grande quantité d'eau qu'elle contient.

Les mesures de quantité de mortier-colle s'écoulant entre les blocs ont montré que la quantité de mortier-colle qui s'écoule représente environ 15% en poids par rapport à la quantité appliquée dans le cas de la composition 1, et environ 25% en poids de la quantité appliquée dans le cas de la composition 2.

Ces différents résultats montrent que la composition de mortier-colle selon la présente invention présente de nombreux avantages par rapport aux formulations de l'art antérieur.

## Revendications

1. Composition pâteuse de mortier-colle prêt à l'emploi et mono composant pour la construction de murs non porteurs en blocs de maçonnerie, **caractérisée en ce qu'**elle comprend au moins :
- de 50% à 90% en poids de granulats dont au moins 15% ont une taille de particules comprise entre 0,5 mm et 1,5 mm,
- de 6 à 12 % en poids d'eau, et
- de 2 à 8% en poids d'un liant organique.

2. Composition selon la revendication précédente **caractérisée en ce qu'**elle comprend entre 50 et 90% en poids de granulats dont au moins 20% ont une taille comprise entre 0,5 mm et 1,5 mm.

3. Composition selon l'une des revendications précédentes **caractérisée en ce qu'**elle comprend entre 75 et 90% de granulats dont au moins 15% ont une taille de particules comprise entre 0,5 mm et 1,5 mm.

4. Composition selon l'une des revendications précédentes **caractérisée en ce que** le liant organique est un composé polymérique possédant une température minimale de formation de film inférieure à 5°C et une température de transition vitreuse inférieure à 10°C.

5. Composition selon la revendication 4 **caractérisé en ce que** le liant organique est à base de polymères synthétiques dispersés dans un liquide aqueux et/ou sous forme de poudre redispersible.

6. Composition selon l'une des revendications 4 ou 5 **caractérisée en ce que** les polymères sont choisis parmi les copolymères styrène-butadiène, les copolymères styrène-acrylate, les copolymères vinyle acrylique, les polymères acrylates, les copolymères éthylène-acétate de vinyle, les esters d'acide acrylique, et les hydrocarbures non-aromatiques comprenant au moins deux doubles liaisons.

7. Composition selon l'une des revendications 4 à 6 **caractérisée en ce que** le liant organique est une dispersion polymérique, la teneur en matière sèche du liant organique représentant de 20 à 70 parties en poids de la dispersion polymérique, le reste étant un liquide aqueux.

8. Composition selon l'une des revendications précédentes **caractérisée en ce que** la quantité d'eau est comprise entre 6 et 10% en poids par rapport au poids total de la composition.

9. Composition selon l'une des revendications précédentes **caractérisée en ce qu'**elle comprend en outre un ou plusieurs additifs choisi parmi les agents épaississants, les agents rétenteurs d'eau, les agents accélérateurs ou retardateurs de prise, les agents de protection biocides et/ou fongicides, les agents dispersants, les agents démoussants, les agents plastifiants, les agents conservateurs et/ou les pigments, chacun de ses additifs représentant de préférence moins de 5% du poids de la composition totale.

10. Procédé d'érection d'un mur non porteur comprenant une pluralité de rangées de blocs de maçonnerie superposées les unes sur les autres, ledit procédé comprenant les étapes suivantes :
a. application d'une couche de la composition de mortier-colle selon l'une des revendications 1 à 9 sur au moins une partie de la face supérieure d'une première rangée inférieure de blocs de maçonnerie, puis
b. positionnement d'une rangée de blocs de maçonnerie sur de ladite rangée inférieure recouverte en partie de la couche de mortier-colle, et
c. répétition des étapes a) et b) jusqu'à atteindre la hauteur souhaitée du mur.

11. Procédé selon la revendication 10 **caractérisé en ce que** les blocs de maçonnerie sont des blocs de dimensions prédéfinies, en argile expansé, comme par exemple des blocs en Leca®, en béton ou en silicate de calcium, ou en tout autre matériau similaire permettant de former des blocs moulés.

12. Procédé selon l'une des revendications 10 ou 11 **caractérisé en ce que** l'application de la couche de mortier-colle est réalisée de façon manuelle, par exemple avec une spatule crantée ou une truelle, avec rouleau-applicateur que l'on déplace sur la rangée de blocs de maçonnerie et qui libère la composition pâteuse au fur et à mesure de son déplacement, avec une pompe à dosage équipée d'une ou plusieurs filières d'extrusion, une poche à colle, ou un contenant type boite ou bouteille équipé de buse permettant d'extraire directement la composition pâteuse de mortier-colle.

13. Procédé selon l'une des revendications 10 à 12 **caractérisé en ce que** la couche de mortier-colle est appliquée sur une épaisseur comprise entre 1 et 2 mm.

## Patentansprüche

1. Pastöse Klebemörtelzusammensetzung, die gebrauchsfertig ist und ohne zusätzliche Komponenten auskommt, wobei sie für den Bau nichttragender Wände aus Mauerwerksblöcken bestimmt ist, **dadurch gekennzeichnet, dass** sie mindestens Folgendes umfasst:
- 50 % bis 90 % nach Gewicht an Gesteinskörnungen, wobei mindestens 15 % davon eine Partikelgröße im Bereich von 0,5 mm und 1,5 mm haben,
- 6 bis 12 Gewichts-% an Wasser, und
- 2 bis 8 Gewichts-% eines organischen Bindemittels.

2. Zusammensetzung nach dem vorhergehenden Anspruch, **dadurch gekennzeichnet, dass** sie zwischen 50 und 90 Gewichts-% an Gesteinskörnungen umfasst, wobei mindestens 20 % davon eine Größe im Bereich von 0,5 mm bis 1,5 mm haben.

3. Zusammensetzung nach einem der vorhergehenden Ansprüche, **dadurch gekennzeichnet, dass** sie zwischen 75 und 90 Gewichts-% an Gesteinskörnungen umfasst, wobei mindestens 15 % davon eine Partikelgröße im Bereich von 0,5 mm bis 1,5 mm haben.

4. Zusammensetzung nach einem der vorhergehenden Ansprüche, **dadurch gekennzeichnet, dass** es sich bei dem organischen Bindemittel um eine polymerartige Verbindung handelt, die eine Mindestfilmbildungstemperatur von weniger als 5 °C und eine Glasübergangstemperatur von weniger als 10 °C besitzt.

5. Zusammensetzung nach Anspruch 4, **dadurch gekennzeichnet, dass** das organische Bindemittel auf synthetischen Polymeren basiert, die in einer wässrigen Flüssigkeit dispergiert sind und/oder als wieder dispergierbares Pulver vorliegen.

6. Zusammensetzung nach einem der Ansprüche 4 oder 5, **dadurch gekennzeichnet, dass** die Polymere aus den Styrol-Butadien-Copolymeren, den Styrol-Acrylat-Copolymeren, den Copolymeren aus Vinyl- und Acrylverbindungen, den Acrylatpolymeren, den Ethylen-Vinylacetat-Copolymeren, den Acrylsäureestern und den nicht-aromatischen Kohlenwasserstoffen, die mindestens zwei Doppelbindungen umfasst, ausgewählt sind.

7. Zusammensetzung nach einem der Ansprüche 4 bis 6, **dadurch gekennzeichnet, dass** es sich bei dem organischen Bindemittel um eine Polymerdispersion handelt, wobei der Trockensubstanzgehalt des organischen Lösungsmittels 20 bis 70 Gewichtsteile der Polymerdispersion ausmacht, wobei es sich bei dem Rest um eine wässrige Flüssigkeit handelt.

8. Zusammensetzung nach einem der vorhergehenden Ansprüche, **dadurch gekennzeichnet, dass** die Menge an Wasser im Bereich von 6 bis 10 Gewichts-% liegt, unter Bezugnahme auf das Gesamtgewicht der Zusammensetzung.

9. Zusammensetzung nach einem der vorhergehenden Ansprüche, **dadurch gekennzeichnet, dass** sie darüber hinaus einen oder mehrere Zusatzstoffe umfasst, die aus den Verdickungsmitteln, den Wasserrückhaltemitteln, den Abbindebeschleunigern oder -verzögerern, den bioziden und/oder fungiziden Schutzmitteln, den Dispersionsmitteln, den Schaumverhütern, den Plastifizierungsmitteln, den Konservierungsstoffen und/oder den Pigmenten ausgewählt sind, wobei jeder der Zusatzstoffe vorzugsweise weniger als 5 Gewichts-% der Zusammensetzung insgesamt ausmacht.

10. Verfahren zum Errichten einer nicht-tragenden Wand, die mehrere übereinander angeordnete Reihen von Mauerwerksblöcken umfasst, wobei das Verfahren die folgenden Schritte umfasst:
a. Aufbringen einer Schicht der Klebemörtelzusammensetzung nach einem der Ansprüche 1 bis 9 auf mindestens einen Abschnitt der Oberseite einer ersten untenliegenden Reihe von Mauerwerksblöcken, und dann
b. Anordnen einer Reihe von Mauerwerksblöcken auf der untenliegenden Reihe, welche abschnittweise von der Klebemörtelschicht bedeckt ist, und
c. Wiederholen der Schritte a) und b), bis die gewünschte Höhe der Wand erreicht ist.

11. Verfahren nach Anspruch 10, **dadurch gekennzeichnet, dass** es sich bei den Mauerwerksblöcken um Blöcke mit vorbestimmten Abmessungen handelt, die aus Blähton, wie es beispielsweise bei Leca®-Blöcken der Fall ist, aus Beton oder aus Calciumsilikat oder aus einem beliebigen ähnlichen Material bestehen, mittels dessen geformte Blöcke gebildet werden können.

12. Verfahren nach einem der Ansprüche 10 oder 11, **dadurch gekennzeichnet, dass** das Aufbringen der Klebemörtelschicht von Hand erfolgt, beispielsweise mit einem Zahnspachtel oder einer Maurerkelle, mit einem Auftrageroller, welcher über die Reihe von Mauerwerksblöcken geführt wird und welcher die pastöse Zusammensetzung im Verlauf seiner Bewegung allmählich abgibt, mit einer Dosierpumpe, welche mit einer oder mehreren Extrusionsdüsen ausgestattet ist, einem Kleberbeutel oder einem Behälter vom Typ Dose oder Flasche, welcher mit einer Düse versehen ist, die es ermöglicht, die pastöse Klebemörtelzusammensetzung unmittelbar zu entnehmen.

13. Verfahren nach einem der Ansprüche 10 bis 12, **dadurch gekennzeichnet, dass** die Klebemörtelschicht in einer Dicke im Bereich von 1 bis 2 mm aufgebracht wird.

## Claims

1. Ready-to-use single-component pasty adhesive mortar composition for constructing non-bearing walls made from blockwork, **characterized in that** it comprises at least:
- from 50 wt% to 90 wt% of granulate matter, of which at least 15% have a particle size comprised between 0.5 mm and 1.5 mm,
- from 6 to 12 wt% water, and
- from 2 to 8 wt% of an organic binder.

2. Composition according to the preceding claim, **characterized in that** it comprises between 50 and 90 wt% of granulate matter of which at least 20% have a size comprised between 0.5 mm and 1.5 mm.

3. Composition according to one of the preceding claims, **characterized in that** it comprises between 75 and 90% granulate matter of which at least 15% have a particle size comprised between 0.5 mm and 1.5 mm.

4. Composition according to one of the preceding claims, **characterized in that** the organic binder is a polymer compound having a minimum film forming temperature of below 5°C and a glass transition temperature of below 10°C.

5. Composition according to Claim 4, **characterized in that** the organic binder is based on synthetic polymers dispersed in an aqueous liquid and/or in the form of re-dispersible powder.

6. Composition according to one of Claims 4 and 5, **characterized in that** the polymers are selected from styrene-butadiene copolymers, styrene-acetate copolymers, vinyl acrylic copolymers, acrylate polymers, ethylene-vinyl acetate copolymers, acrylic acid esters and non-aromatic hydrocarbons containing at least two double bonds.

7. Composition according to one of Claims 4 to 6, **characterized in that** the organic binder is a polymer dispersion, the dry-matter content of the organic binder representing 20 to 70 parts by weight of the polymer dispersion, the rest being an aqueous liquid.

8. Composition according to one of the preceding claims, **characterized in that** the quantity of water is comprised between 6 and 10 wt% with respect to the total weight of the composition.

9. Composition according to one of the preceding claims, **characterized in that** it further comprises one or more additives selected from thickening agents, water retaining agents, setting accelerators or retarders, biocidal and/or fungicidal protection agents, dispersant agents, anti-foaming agents, plasticizing agents, preservatives and/or pigments, each of its additives preferably representing under 5 wt% of the total composition.

10. Method for erecting a non-bearing wall comprising a plurality of courses of blockwork superposed on one another, the said method comprising the following steps:
a. applying a layer of the adhesive mortar composition according to one of Claims 1 to 9 to at least part of the top face of a lower first course of blockwork, then
b. positioning a course of blockwork on the said lower course partially covered with the layer of adhesive mortar, and
c. repeating steps a) and b) until the desired height of wall is reached.

11. Method according to Claim 10, **characterized in that** the blockwork is blocks of predefined dimensions, made of expanded clay, such as blocks made of Leca®, of concrete or of calcium silicate for example, or of any other similar material allowing moulded blocks to be created.

12. Method according to one of Claims 10 and 11, **characterized in that** the application of the layer of adhesive mortar is performed by hand, for example using a serrated spreader or a trowel, with an applicator roller that is moved over the course of blockwork and which releases the pasty composition as it travels, with a metering pump equipped with one or more extrusion dies, a scoop or a container of the can or bottle type fitted with a nozzle allowing the pasty adhesive mortar composition to be extracted directly.

13. Method according to one of Claims 10 to 12, **characterized in that** the layer of adhesive mortar is applied to a thickness of between 1 and 2 mm.
